# EUROPEAN PATENT SPECIFICATION

(11) **EP 0 627 956 B1**
(45) Date of publication and mention of the grant of the patent: **15.11.1995**
(21) Application number: 93906048.9
(22) Date of filing: 18.02.1993
(51) Int. Cl.: B01D 63/06

(54) **MEMBRANE-BASED APPARATUS FOR SEPARATION OF FLUIDS**
MEMBRAN-TRENNVORRICHTUNG FÜR FLUIDE
APPAREIL POUR SEPARATION DES FLUIDES AYANT POUR BASE UNE MEMBRANE

(30) Priority: 28.02.1992 US 843687; 08.12.1992 US 986838; 08.12.1992 US 986839; 08.12.1992 US 986641
(43) Date of publication of application: 14.12.1994
(73) Proprietor: THE DOW CHEMICAL COMPANY, Midland, Michigan 48640 (US)
(72) Inventor: WESTLAKE, Theodore, N., III, Baton Rouge, LA 70808 (US); WOLCOTT, Duane, K., Baton Rouge, LA 70808 (US); DELEO, Gary, D., Donaldsonville, LA 70346 (US)
(74) Representative: Peuscet, Jacques
(86) International application number: US9301440
(87) International publication number: WO9316790

(56) References cited:
- EP-A- 0 116 155
- DE-A- 2 338 070
- FR-A- 1 268 587
- GB-A- 1 546 179
- GB-A- 2 036 595
- US-A- 3 483 990

## Description

The present invention relates to devices for selectively separating out certain materials from within a complex matrix stream or aggregation of flowable materials, and more particularly to such devices which employ permeation membrane or diffusion membrane tubing to collect and isolate these certain materials from within the stream or aggregation. The present invention further relates, in one significant aspect, to membrane tubing-based devices useful in the detecting, monitoring and/or measuring of low-level concentrations of materials within a stream or aggregation, both in an on-line process environment and in an off-line, purely analytical context or environment.

Tubular membranes have been suggested for use in this capacity in a number of analytical devices, and are particularly of interest for use in separating out those components of a complex stream which might adversely affect a gas or liquid chromatograph or other analytical device if one attempted to analyze the complex stream directly. Exemplary of these devices are those described in United States Patents No. 4,715,217 to Coyne et al. and 4,944,180 to Tou et al., both of which are commonly-assigned and owned with the present invention.

Tubular membranes have also been utilized in on-line, direct insertion systems for the real-time monitoring of certain low-level materials in a matrix stream of materials, but in limited circumstances. For example, in United States Patent No. 4,832,034 to Pizziconi et al., a length of capillary membrane is inserted directly into the blood stream of a patient for monitoring biological reactions and trends. A similar device is described in Brodbelt et al., "In Vivo Mass Spectrometric Determination of Organic Compounds in Blood with a Membrane Probe", Anal. Chem., 1987, Vol. 59, pages 454-457, wherein a membrane probe is supported internally over a portion of its length by the insertion of a nylon monofilament and is used in vivo.

United States Patent No. 3,483,990 to Litle describes a membrane-based dialyzer device which operates externally of the patient's body, and which is coupled with a dual-lumen catheter to be inserted into the patient's vein. The dialyzer is comprised of a cylindrical, sheath-type dialysis membrane into which is inserted a helically grooved, cylindrical support core for providing a helical flow path for a saline carrier solution along the inside of the sheath membrane. A heparin/saline solution is pumped through the inner lumen of the dual-lumen catheter, and combines with blood and is returned via the outer lumen to the dialyzer. In one embodiment, the heparin/blood solution follows an annular flow path along the outside of the dialysis membrane. In a second embodiment, the cylindrical outer housing is also helically grooved, so that helical flow paths are defined along both the inside and outside of the sheath membrane for the saline carrier and for the heparin/blood solution, respectively.

Other membrane-covered probes have been used apparently for monitoring and controlling the reactions in bioreactors. In Cox, "Membrane inlets for On-Line Liquid Phase Mass Spectrometric Measurements in Bioreactors", Mass Spectrometry in Biotechnological Process Analysis and Control Plenum Press, 1987 at pages 63-65 is described a perforated stainless steel tube which is capped at one end and which is inserted into the core of silicone rubber tubing. Other devices are described which appear to be of a fundamentally similar nature.

The known tubular membrane-based devices possess various shortcomings, however, in terms either of versatility of use in both process and analytical contexts or environments, of an exposure of the membrane to abrasion or cutting by particulates or other suspended debris (e.g., flakes of rust from the inside of a process pipe) in a matrix stream or to damage or destruction in pinch points within a pipe, reactor, other process vessel or instrument, or of having a length of membrane for effecting a separation which is limited either by its unsupported nature and an accompanying tendency to elongate and distort or by space in the instrument or process vessel.

The present invention in contrast provides an apparatus suitable for use in determining the presence and/or concentration of one or more selected materials in a matrix stream or aggregation of flowable materials within a process pipe, reactor or other process vessel, for isolating or removing a selected species from a fluid passing through the lumens of a length of permeation or diffusion membrane tubing, or for supporting a capillary column in a self-contained or self-contained, portable gas chromatographic apparatus. The apparatus which has been developed by the inventors for these purposes may be broadly summarized as including a support member having a groove defined therein and a conduit (in the form of permeation or diffusion membrane tubing, optical fiber or a capillary column) positioned and supported substantially wholly within at least a portion of the groove in the support member, whereby the outside surface of the conduit is substantially protected from adverse external influences over such portion.

The apparatus of the present invention is thus useful in one aspect for determining the presence and/or concentration of one or more selected materials in a significantly larger matrix stream or aggregation of flowable materials within a process pipe, reactor or other process vessel. The apparatus of the present invention in this particular aspect comprises (a) a support member having a first, internal end for inserting into the matrix stream or aggregation when the apparatus is placed in service and a second end positioned externally of the pipe, reactor or other process vessel in use, wherein the support member defines a groove therein of which at least a portion extends into the matrix stream or aggregation in use, and (b) a conduit, in the form of permeation or diffusion membrane tubing or optical fiber, which is positioned and supported substantially wholly (and preferably wholly) within at least that portion of the groove in the support member which extends into the matrix stream or aggregation in use.

More commonly permeation or diffusion membrane tubing will be employed for this application. With respect to optical fibers, however, it has been appreciated in conjunction with the present invention that such fibers could (like the aforementioned tubular membranes) be inserted into a matrix stream or aggregation of flowable materials for determining the presence and/or concentration of one or more selected materials therein by known attenuated total reflectance (ATR) methods. By such methods the one or more selected materials of interest adhere or are captured on the exposed surface of the clad or unclad fiber, and are analyzed through the selective absorption by these materials of near-infrared light traveling over the length of the optical fiber.

With the addition of temperature monitoring or regulating devices, for example through the incorporation respectively in a thermally-conductive support member of a thermocouple (or known resistive temperature device (RTD)) or of a thermocouple and cartridge heater, the apparatus of the present invention is also effectively capable of accounting for or regulating the temperature at the interface of a tubular membrane and a given flowable material, and the permeation/transfer characteristics associated with that temperature.

These two fundamental grooved support member constructions can also form the bases of other related types of separations apparatus. For example, in the area of fluid drying, typical membrane-based apparatus are configured as a "tube within a tube", wherein a tubular membrane is disposed between two capped ends of a pipe and a drying agent is either disposed as a solid on the outside/shell side of the membrane or flows as a liquid or gas drying agent on the shell side of the membrane.

The "tube in a tube" membrane-based dryers having a quantity of a solid drying agent disposed around the tubular membrane are fairly inexpensive, but the solid drying agent is difficult to change, and changing the drying agent requires disassembling the dryer and stopping the flow of a gas or other fluid through the membrane. This flow stoppage causes difficulties, obviously, in those analytical instruments and apparatus which require a steady flow of a high purity dry gas thereto. The dryers employing a flowing stream of a liquid or dry gas drying agent were developed to avoid the changeout and flow stoppage problems associated with solid drying agents, but these dryers are considerably more expensive on the whole than those employing solid drying agents.

In addition, in both designs the tubular membrane must again be self-supporting, which limits the length and thinness of the membrane and thus the rate of mass transfer and drying that can be achieved with such a membrane. Further, the surface of the membrane is exposed and subject to abrasion and wear by contact with the drying agent employed.

By employing one or the other of the grooved support member constructions of the apparatus of the present invention, there is no need to disconnect the membrane supported thereon and to interrupt the flow of gases to an associated analzyer (so that the less expensive solid drying agents can be used), a much longer and thinner membrane can be used if desired, and the membrane is protected from most of the abrasion and damage which would otherwise occur in a conventional design having a more exposed membrane.

Another potentially useful application for the grooved support member constructions of the apparatus of the present invention which has been suggested above, is as a support for the capillary column for a self-contained capillary gas chromatographic or self-contained, portable capillary gas chromatographic apparatus. The "conduit" in this context is a capillary column rather than permeation or diffusion membrane tubing or an optical fiber. In particular, it is expected that the support member construction having internal temperature monitoring and/or temperature regulating means associated therewith will be especially useful as a capillary column support.

The grooved support members of the apparatus of the present invention and the various extensions and applications thereof are illustrated and described in greater detail as follows.

Figure 1 is a top view of a grooved support member in one embodiment, absent a corresponding length of membrane tubing, capillary column or optical fiber.

Figure 2 is a cross-sectional view of the apparatus of Figure 1, taken along line 2-2. Figure 3 is an end view of the apparatus of Figure 1, taken from the perspective of line 3-3.

Figure 4 is an enlarged cross-sectional view of the apparatus as depicted in Figure 2 with a length of membrane tubing added.

Figure 5 is a side view in partial cross-section of an alternative, preferred embodiment of a grooved support member.

Figure 6 is a sectional view of the embodiment of Figure 5, taken along line 6-6. Figure 7 is an end view of the embodiment of Figure 5, as taken from the perspective of line 7-7.

Figure 8 is a cross-sectional view of an apparatus for on-line calibration in a process control context of a device of the types shown in Figures 1-4 and 5-7.

Figure 9 is a cross-sectional view of an alternate apparatus for the on-line calibration of a device of the types shown in Figures 1-4 and 5-7.

Figure 10 shows a preferred manner of joining an apparatus of the type shown in Figures 5-7, a source of a receiving fluid and an analytical apparatus in fluid communication.

Figure 11 is a partially cross-sectional view of a flow cell apparatus which employs an apparatus as shown in Figures 5-7 for analyzing a slipstream off a larger process stream.

Figure 12 depicts a preferred membrane-based fluid separations apparatus (e.g., fluid dryer) which incorporates the apparatus of Figures 5-7 and 10.

Figure 13 is a cross-sectional view of a carrier gas generator useful in a portable or self-contained capillary gas chromatographic apparatus, in combination with the apparatus of Figures 1-4 or of Figures 5-7 and 10.

Figure 14 is a general schematic diagram of a self-contained capillary gas chromatographic apparatus or self-contained, portable capillary gas chromatographic apparatus which employs the generator of Figure 13 and which may further employ the apparatus of Figure 12 and/or the sampling apparatus of Figures 5-7 and 10 or Figure 11, along with a capillary column support configured as in Figures 5-7.

Figure 15 is a schematic diagram of a portable or self-contained capillary gas chromatographic apparatus in a preferred embodiment.

Figure 16 is a graphical representation of data from Example 1.

Figure 17 is a graphical representation of data from Example 2.

Figure 18 is a graphical representation of data from Example 3.

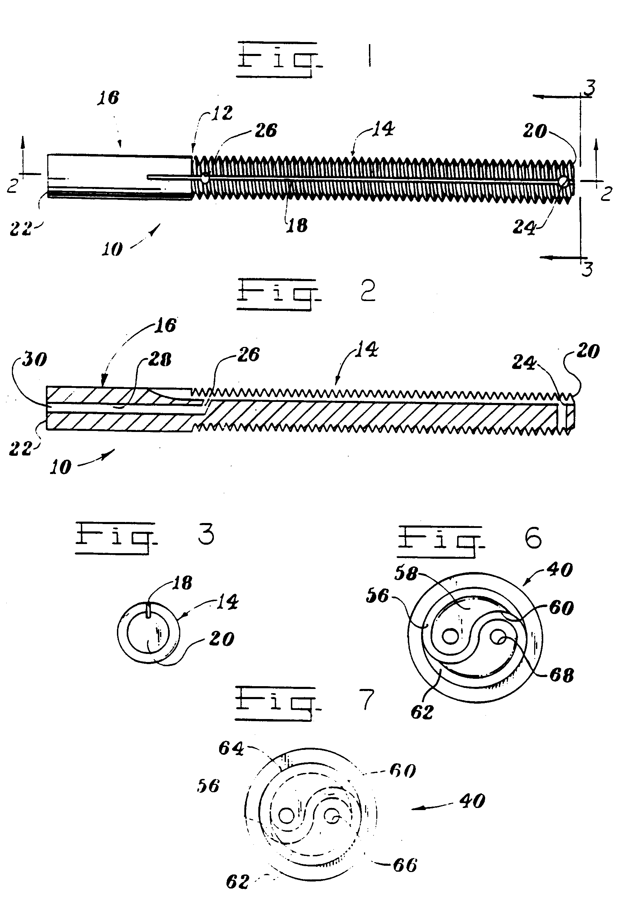

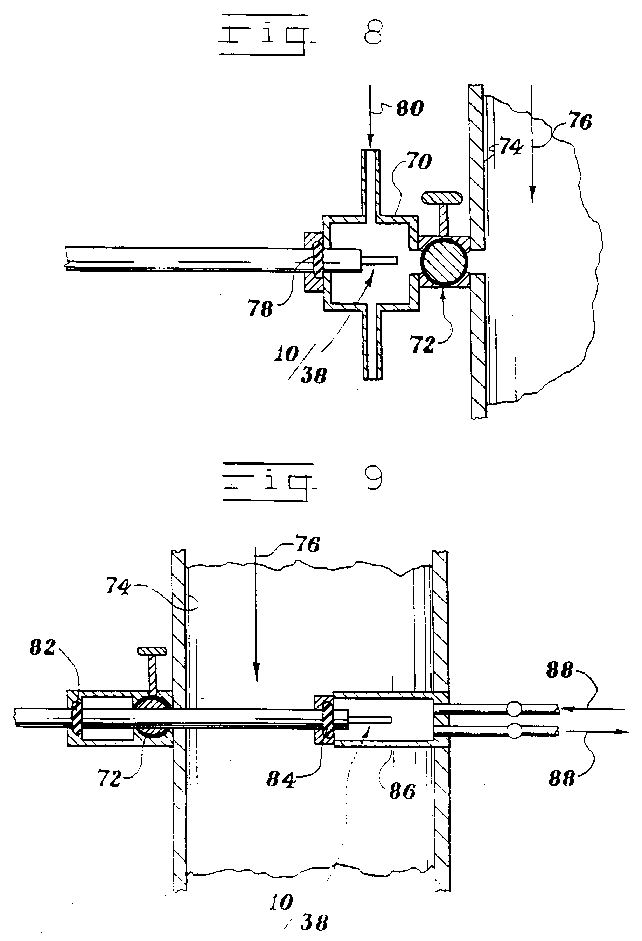

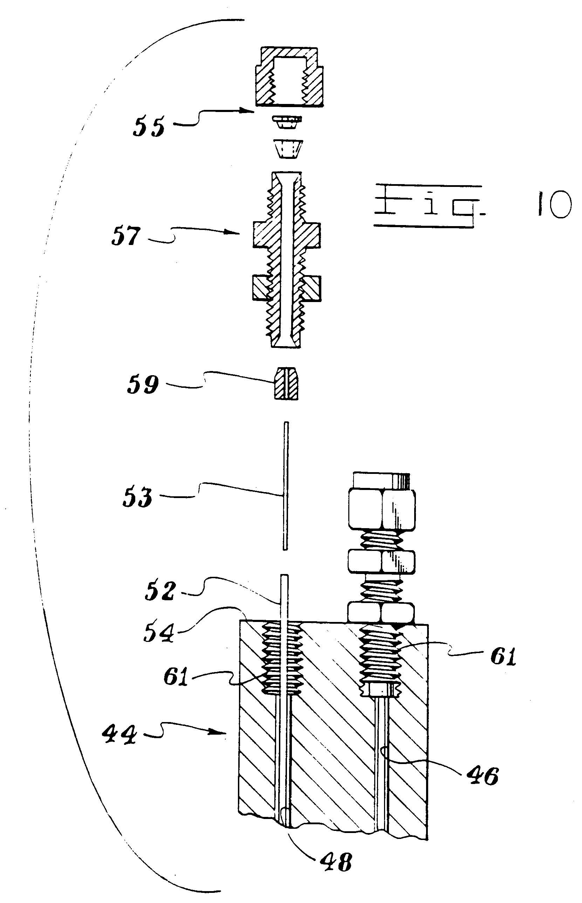

Referring now to Figures 1-7 and 10, two alternative embodiments of a grooved tubular membrane/capillary column/optical fiber support member are depicted. A first embodiment or elements thereof is shown in Figures 1-4, while a preferred alternative embodiment and elements thereof are addressed in Figures 5-7 and 10.

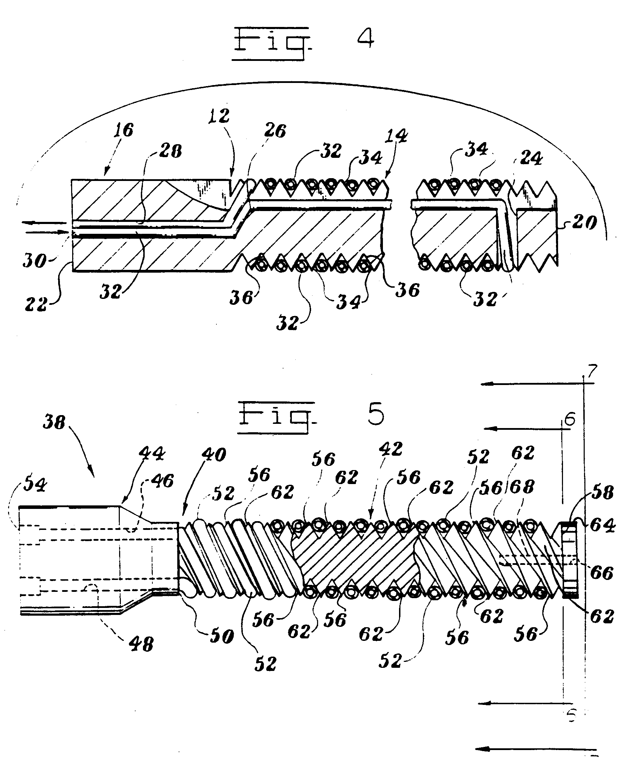

Turning now to Figure 1, the first embodiment 10 includes a support member 12 which is comprised of a first, single-flight threaded portion 14 and a second, unthreaded portion 16. A groove 18 is defined in the member 12 which cuts through the threads of threaded portion 14 from a first end 22 of the member 12 toward a second end 20 of the member 12 (see Figures 2 and 3).

A first hole 24 is defined through the member 12 adjacent the second end 20 and in communication with the groove 18, while a second hole 26 is defined in the threaded portion 14 near its boundary with the unthreaded portion 16 of member 12.

This second hole 26 preferably extends into the support member 12 at an angle, and terminates in a central channel 28. Channel 28 defines an opening 30 into the core of member 12 at the first end 22 of member 12, and extends generally along the longitudinal axis of member 12, terminating at some point short of intersecting with the first hole 24 but at least being in communication with the second hole 26.

The manner in which a capillary membrane or other "conduit" is supported by the support member 12 is shown in Figure 4. In Figure 4, and as described in the context of using the apparatus for direct-insertion sampling from a stream or aggregation of flowable materials, a capillary membrane 32 feeds from a source of a receiving fluid (not shown) through opening 30 at the first end 22 of member 12, and extends through central channel 28 and the second hole 26.

On exiting channel 28 through the second hole 26, the membrane 32 traverses the threaded portion 14 of member 12 via the groove 18 until the first hole 24 is reached. The membrane 32 then feeds through the hole 24 and begins winding its way back along the length of the member 12 through successive flights in the threaded portion 14, while being positioned and supported wholly within such flights in the sense that no portion of the membrane 32 in a flight extends above the thread crests 34 defining the flight on either side.

In this way potentially damaging particulates or debris in a stream in which the supported membrane 32 is immersed come into contact with the crests 34 rather than the membrane 32. In a similar fashion, the membrane 34 is protected from the elongating or distorting influence of the surrounding stream due to the support provided by the flanks 36 of adjacent threads. Where the stream to be monitored has a relatively high flow rate and is likely to exert a good deal of force on an unsupported membrane, as will be the case in many process streams of interest, this feature is likely to be of significant value.

As the membrane 32 reaches the second hole 26 from which it (i.e., the membrane 32) originally emerged, the membrane 32 is fed back through the hole 26 and channel 28 and emerges from the opening 30.

The membrane tubing 32 is then placed in fluid communication with means for analyzing a stream of receiving fluid circulated through the membrane 32 in use of the apparatus, preferably by tubing or some other means which is inert to, and which does not interfere with, transmission of the selected materials received from a matrix stream in which the supported membrane 32 (or other conduit) has been placed. Depending on the nature of the materials to be collected from the matrix stream and of the receiving fluid, the analytical means employed can include, for example, a gas chromatograph with mass spectrometer or a liquid chromatograph.

In another, more preferred embodiment 38 of the grooved support member which is shown in Figures 5-7 and 10, the support member 40 has a double-lead flight threaded portion 42 and an unthreaded portion 44. Two channels 46 and 48 are defined longitudinally through the unthreaded portion 44, and emerge at a shoulder 50 of the unthreaded portion 44 in position to receive from or transmit to a helical flight of the adjacent threaded portion 42 a membrane 52 supported therein. Short, curving transition channels (not shown) may preferably be provided in the surface of the unthreaded portion 44 adjacent the shoulder 50 for easing the transition of the membrane 52 between the channels 46 and 48 and the flights of the threaded portion 42. Preferably capillary membrane ends placed in these channels 46 and 48 are adapted to be joined in secure fluid communication with a source (not shown) of a receiving fluid and with a gas or liquid chromatograph (also not shown) or the like, respectively.

The presently preferred construction for joining the membrane 52 in communication with a source of a receiving fluid, and in turn with a gas or liquid chromatograph or the like, is shown in Figure 10, wherein one end of a length of membrane support tubing 53 is inserted into and holds open the central lumens of the membrane tubing 52. This membrane support tubing 53 can be made of, for example, stainless steel or a fused silica glass.

Membrane support tubing 53 is in turn securely joined via a two ferrule compression-type fitting 55 to a conventional tubing lead (not shown, and comprised, e.g., of stainless steel or nickel) to the gas or liquid chromatograph. A compression-type tube-to-tube bulkhead fitting 57 ties the assembly 55 and a membrane sealing ferrule 59 into an integrated whole, with the fitting 57 being joined to the support member 40 by the threaded engagement of fitting 57 with a threaded portion 61 of a channel 46 or 48 in the unthreaded portion 44 of support member 40

The membrane tubing 52 associated in use with the support member 40 thus enters the unthreaded portion 44 through channel 46 from a first end 54 of the member 40 and from a source of the receiving fluid to be employed in membrane 52.

Returning now to Figures 5-7, the membrane 52 is then wrapped around the support member 40 through alternating flights 56 (Figure 5) toward a second end 58 of member 40, with the membrane 52 being positioned and supported wholly within the flights 56 as in the embodiment of Figures 1-4.

At the second end 58 of the support member 40, and as best shown in Figure 6, the membrane 52 then travels through an S-shaped channel 60 in the second end 58 of the support member 40 which joins the alternating helical return flights 62 in communication with the flights 56. The membrane 52 in traversing flights 62 thus is wrapped around member 40 through those alternating flights which had been "skipped" in going from the first end 54 of the member 40 to the second end 58 of member 40.

The membrane 52 returns to and is received by the channel 48 in the unthreaded portion 44 of the support member 40. The receiving fluid and any selected materials collected by the membrane 52 and carried by the receiving fluid are communicated through channel 48 to a gas or liquid chromatograph, preferably by the arrangement depicted in Figure 10 and described above.

A protective cap 64 is placed over the S-shaped channel 60 in the second end 58 of the support member 40, and is conventionally joined to the support member 40 as through bolts or screws placed through holes 66 in the cap 64 and corresponding holes 68 in the second end 58 of support member 40. The function of protective cap 64 is to help contain the membrane 52 in the S-shaped channel 60, and further to protect the membrane 52 in the S-shaped channel 60 from damage should the apparatus be inserted too far into a process pipe, for example, and encounter the opposite wall of the pipe (assuming a preferred, generally transverse presentation or insertion with respect to the matrix stream, as opposed to an axial insertion) or should the apparatus second end 58 encounter some other obstacle on insertion.

It may also be desirable to employ the cap 64 as a spacer of sorts, wherein the cap 64 would be sized so that when the second end 58 is placed against a pipe wall or the like, the membrane 52 in the threaded portion 42 of the member 40 would be precisely and controllably positioned in the matrix stream, as for example to avoid encountering fouling on the inside walls of the pipe. It should be observed that while the protective cap 64 is illustrated only with respect to the embodiment of Figures 5-7, a similar protective cap or spacer could be readily employed in the embodiment of Figures 1-4.

In the indicated use of either of the two embodiments depicted in Figures 1-7, a portion of the capillary membrane or other conduit associated with a device is exposed to a complex process stream or aggregation of flowable materials in, for example, a pipe, reactor or other process vessel (the stream or aggregation containing or carrying one or more selected materials therein of interest) by inserting the first end of the device into the stream or aggregation. Where the process stream is of a character and/or flow rate which is likely to damage a bare, unsupported membrane, then at least that portion of the membrane exposed to the process stream is positioned and supported substantially wholly (and preferably wholly) within a groove defined in the device and extending from the first end of the device toward the second, external end of the device. "Groove" in this sense and as used elsewhere herein embraces the threaded flights of either of the embodiments shown in Figures 1-7, but is not limited thereto. What is intended for purposes of the present invention and disclosure is that those portions of a capillary membrane (or other conduit) which are immersed in and exposed to potentially damaging or distorting environments should be protected from these environments, by being supported and positioned within a recessed portion (groove) of the body of a support member.

It is advantageous, however, for improving the overall sensitivity of the devices shown in Figures 1-4 and 5-7 that the portion of membrane available for insertion into a process stream or aggregation be longer, rather than shorter, for a given membrane so that the contact area between the membrane and stream or aggregation is increased. A greater contact area permits the recovery of a greater amount of a given low-level material in a stream over a given length of time, and consequently enables the more timely and effective monitoring of such a material. A continuous groove in the form of threads or a support member is for this reason to be preferred over a groove proceeding more directly from the first end toward the second, external end of the device. For this reason as well, it is considered that the double-lead flight threaded embodiment of Figures 5-7 (in which the threaded flights going from the second end to the first end, and from the first end back toward the second end may be thought of as two connected grooves (a first groove for traversing the support member in one direction, and a second groove for traversing the support member in the reverse direction, for example, toward the insertion point of the device into a process pipe or the like)) will normally be preferred over the single flight threaded construction of Figures 1-4.

By similar reasoning, normally it will be desirable: (a) for the groove carrying the membrane in a given apparatus to extend from the first, internal end of the support member to an interior wall of the process pipe, reactor or other vessel in which the apparatus is used, or where the stream in question does not substantially fill a pipe or vessel to such interior wall, at least to span as much of the matrix stream as possible and as consistent with the effective use of the device (see in this regard the earlier discussion of the protective cap as a spacer); and (b) for the membrane carried within such groove to be essentially coextensive with the groove.

Thus, in the embodiment of Figures 1-4 the threaded portion 14 of member 12 is preferably designed to extend from its first end 20 to an interior wall of a pipe, reactor or other vessel into which the apparatus is inserted, and the second hole 26 into which the membrane 32 returns is preferably near the interface of the unthreaded and threaded portions 16 and 14, respectively, of the member 12. Similarly, the interface between the threaded and unthreaded portions 42 and 44 of the more preferred embodiment is preferably designed to correspond to an interior wall of a vessel or pipe in which the apparatus is employed.

As the membrane of an apparatus is exposed to the matrix stream or aggregation and to the one or more selected materials of interest therein, an appropriate receiving fluid (which may be either a gas or liquid) is circulated through the central lumens of the membrane. The materials to be collected by the membrane from the matrix stream permeate or diffuse through the walls of the membrane and into a receiving fluid, and the receiving fluid carries the collected materials to some analytical means, such as a gas chromatograph/mass spectrometer combination or a liquid chromatograph.

The circulation of the receiving fluid and/or the analysis of the receiving fluid from the membrane of a device may be manually initiated, or one or both may preferably be initiated by some conventionally-known remote automated means for accomplishing this function so that sampling and analysis of the process stream may be more conveniently done. Suitable apparatus are known to the art and are described, for example, in Automated Stream Analysis For Process Control Vol. 1 (Academic Press, Manka ed., 1982) and Nichols, On-Line Process Analyzers (John Wiley and Sons, 1988).

It will be preferred in many applications, also, that the means for analyzing the receiving fluid from the membrane be coupled to some sort of process control, for example, to any conventionally-known means for redirecting the flow and/or for altering the composition of the stream being monitored responsive, for example, to the presence in the stream of a given concentration of one or more selected materials.

In terms of further characterizing the capillary membranes (or other conduits generally), support members, receiving fluids and analytical devices useful in this application and use of apparatus of the present invention, all of these elements are application-dependent and it is considered that those skilled in the art will be well able to select an appropriate combination of these elements for a given application without undue experimentation.

With respect to the tubular membranes useful in the present invention, it is believed that permeation membrane or diffusion membrane tubing may variously be used and selected depending on the intended application of the apparatus.

It will generally be preferred for a given membrane that the wall thickness of the membrane be selected to be as thin as possible to keep the membrane intact and the central lumens of the membrane fully open throughout the membrane's length.

The support member can be made of any number of materials, but preferably will be inert to its environment and will have a degree of chemical resistance and resistance to wear by flowing particulates or debris appropriate to the stream in which the support member is to be immersed. At the same time, the material for the support member should ideally be relatively inexpensive and should machine well so that the threads, channels, grooves and the like of the support member may be incorporated therein without undue expense or difficulty.

For devices employing a tubular membrane as the conduit, the receiving fluid can be either a gas or a liquid. The particular gas or liquid is not critical to the invention as long as the material received through the membrane is either volatile in the gas or soluble in the liquid receiving fluid used, and as long as the receiving fluid itself does not appreciably permeate or diffuse out through the membrane. When the receiving fluid is a liquid, then the analytical means employed for the receiving fluid can comprise a liquid chromatograph. When the receiving fluid is a gas, then the analytical means preferably comprises, for example, a gas chromatograph and mass spectrometer.

Standardization of the apparatus in an on-line, process control context can be done in a couple of ways, depending on whether one may safely and practicably open a process pipe or vessel and insert the apparatus, or whether external standardization of the device is feasible.

Where external standardization of the device is feasible and can be safely done, the device may conveniently be designed and sized to be insertable through a gate valve or the like into a process pipe or vessel. Standardization of this embodiment may simply involve immersing and stirring the device in a bucket of water or other matrix containing a known concentration of a material of interest.

It will generally be preferable for the support member of this valve-insertable device to be coupled, or to be at least capable of being coupled, to a stinger which is also insertable through a standard gate valve to a process conduit or vessel. In practical terms, this will involve sizing the unthreaded portions of the probe embodiments of Figures 1-4 and 5-7 to be joinable to a length of conventional piping by a piping union, with a ferrule having been placed around the unthreaded portion of the probe. The leads to and from a source of a receiving fluid and the particular analytical means employed in an apparatus can then preferably be protected by running these leads through the length of piping.

Where the process pipe, reactor or vessel is pressurized or under a vacuum, for example, or where there is a need to limit the exposure or risk of exposure of a person taking the measurement of the stream or aggregation in question to such stream or aggregation, then an on-line standardization of the device is appropriate.

This on-line standardization can be accomplished with the same valve-insertable embodiment of the apparatus by constructing, as shown in Figure 8, an external calibration or standardization chamber 70 in communication with a valve 72 and positioned opposite the process pipe or vessel 74 containing the stream 76 to be monitored. The valve-insertable device 10 or 38 is passed into the calibration chamber 70 through a sliding seal 78; when the valve 72 is closed, the device 10 or 38 is isolated from the process pipe or vessel 74 so that a standard flow 80 may be passed through the chamber 70. The device (10 or 38) may then be moved directly into the process pipe or vessel 74 by opening the valve 72 and inserting the device through the open valve 72. The sliding seal 78 by which the device is entered into the calibration chamber 70 prevents the contents of the pipe, reactor or vessel 74 from coming into contact with a person employing the device.

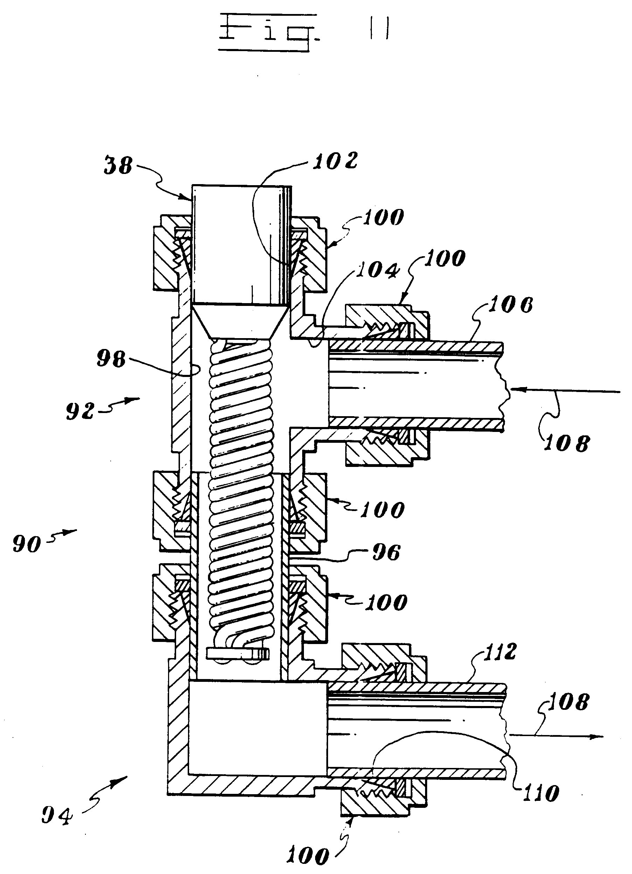

Alternately, and as shown in Figure 9, a first sliding seal 82 may be provided adjacent the valve 72 to permit the valve 72 to be safely opened and the device 10 or 38 inserted therethrough. For calibrating the device 10 or 38, the device is passed through a second sliding seal 84 into an internal standardization chamber 86 defined in the pipe 74, which chamber 86 receives a standard flow 88 therethrough. In still another method, a standard (such as an inert gas or an isotopically-labeled analog of a compound in the process stream) is merely injected into the process pipe 74 upstream of the device 10 or 38. Another method might involve intermittently analyzing a standard in a standardization chamber 70 or 86 while continuously introducing an internal standard upstream of the device 10 or 38.

Discussion thus far has focused on use in the body of a matrix stream or aggregation of flowable materials. In certain instances it may be necessary or desirable to insert the apparatus into a slipstream taken from the matrix stream, however, and for purposes of the defining claims below a slipstream of the matrix stream should be considered as embraced within the confines of "a matrix stream or aggregation of flowable materials". A suitable flow cell apparatus 90 (a type of "process pipe,... or other process vessel" as recited in the claims below) for utilizing an apparatus of the present invention in this fashion is shown in Figure 11.

Referring now to Figure 11, the flow cell apparatus 90 broadly comprises a standard piping tee portion 92, an elbow portion 94 and a length 96 of piping joining the tee and elbow portions 92 and 94. A device 10 or 38 (a device 38 being shown) extends coaxially through a cylindrical bore portion 98 of the tee portion 92, and with a ferrule and threaded nut assembly 100 caps off one opening 102 of the tee portion 92. Side arm 104 of tee portion 92 is coupled via a second ferrule and threaded nut assembly 100 to a pipe 106 from a matrix/process stream, so that a slipstream 108 may be taken from the matrix stream through pipe 106 and along the device 38 in tee portion 92.

This slipstream 108 continues along the device 38 and through the length 96 of piping joining the tee and elbow portions 92 and 94, respectively, and exits through a downstream end 110 of the elbow portion 94. The length 96 of piping is joined through ferrule and threaded nut assemblies 100 at either of its ends to the respective tee and elbow portions 92 and 94, while a return pipe 112 (for returning the slipstream 108 to the matrix stream) is joined to the downstream end 110 of elbow portion 94 via a final ferrule and nut assembly 100.

It has been suggested above that the support member can be made of materials which preferably will be inert to the member's environment and which will have a degree of chemical resistance and resistance to wear by flowing particulates or debris appropriate to the stream in which the support member is to be immersed, while being relatively inexpensive and easy to machine.

Where it is desirable to account for or regulate insofar as possible the temperature at the interface of the tubular membrane and a given flowable material (and thus the permeation/transfer characteristics associated with that temperature), then the support member will be constructed of a thermally conductive material having the desired other characteristics. Where it is desired to simply account for temperature effects, a temperature monitoring device (e.g., a thermocouple or known resistive temperature device (RTD)) is positioned within the support member whereby the temperature of the conduit/stream or aggregation interface may be measured by thermal conduction from the supporting groove portion of the support member to the temperature monitoring device contained within the support member. Where temperature regulation is desired, one or more heaters (for example, cartridge heaters) are additionally placed within the thermally conductive support member.

In those devices wherein a small sample stream or aggregation is operated upon, it has been possible in the past to monitor and regulate the temperature of the sample stream or aggregation and to thus monitor and regulate, indirectly, the temperature at the tubular membrane/fluid interface. Obviously this is not going to be a very practical approach in the context of directly inserting a sample probe into most process streams of interest. And even in the context of a small sample stream (or slipstream) or aggregation, thermal conditioning of the entire sample stream or aggregation can be energy-intensive and troublesome, for example in causing degassing or precipitation of other soluble species in the stream or aggregation.

The provision in a grooved support member of temperature monitoring devices and cartridge heaters enables a more direct and efficient measurement and control of temperature and of transport characteristics even in much larger streams or aggregations of flowable materials, so that analytical data can be properly interpreted or the transport parameters changed for differing circumstances and uses. The presence of one or more heaters also permits a useful, periodic bake-off cycle to drive off less volatile materials which might coat the conduit/membrane over time.

There may be situations where temperature monitoring only is desired; in theses situations, a single well can be drilled in a grooved support member of the type described above from the second, external end of the support member toward the first, internal end of the support member. Preferably the well extends substantially over the entire length of the support member. Any suitable temperature measuring device can be placed in the well, for example a thermocouple or other know resistive temperature device (RTD). Where some form of temperature control is desired in addition to temperature monitoring, one or more wells of a like nature are preferably drilled in the support member, and cartridge heaters or the like placed therein which are RTD-controlled.

A particular, further use of the grooved support members and associated conduits described herein can be viewed as a corollary to the slipstream/flow cell arrangement and method of use, and relates to the use of such apparatus in bench-scale analytical work rather than in drawing samples from a process stream, for example, wherein the sample sparger of a conventional purge and trap device is replaced by a grooved support and associated conduit and especially a grooved support with internal temperature monitoring and heating. By heating the support member and membrane carried thereon to a suitable temperature, volatile organic materials can be quantitatively removed, for example, from a wastewater or outfall sample and analyzed on an associated gas chromatograph as in conventional purge and trap operation.

These grooved support member constructions described thus far can (as mentioned previously) also be used to effect separations in other contexts, e.g., fluid drying, wherein a species is selectively removed from a fluid flowing within the membrane lumens, rather than being selectively transported into the lumens from a stream or aggregation on the outside of the membrane.

In general terms, a membrane-based fluid separations apparatus of this type comprises an outer vessel or outer vessel assembly having an opening defined therein, a grooved tubular membrane support member inserted through and secured in the opening, and a tubular membrane supported in the groove in the probe member and defining first and second ends which can be placed in fluid communication with a source of a fluid from which a species is to be selectively removed and a desired destination for fluid from the membrane, respectively.

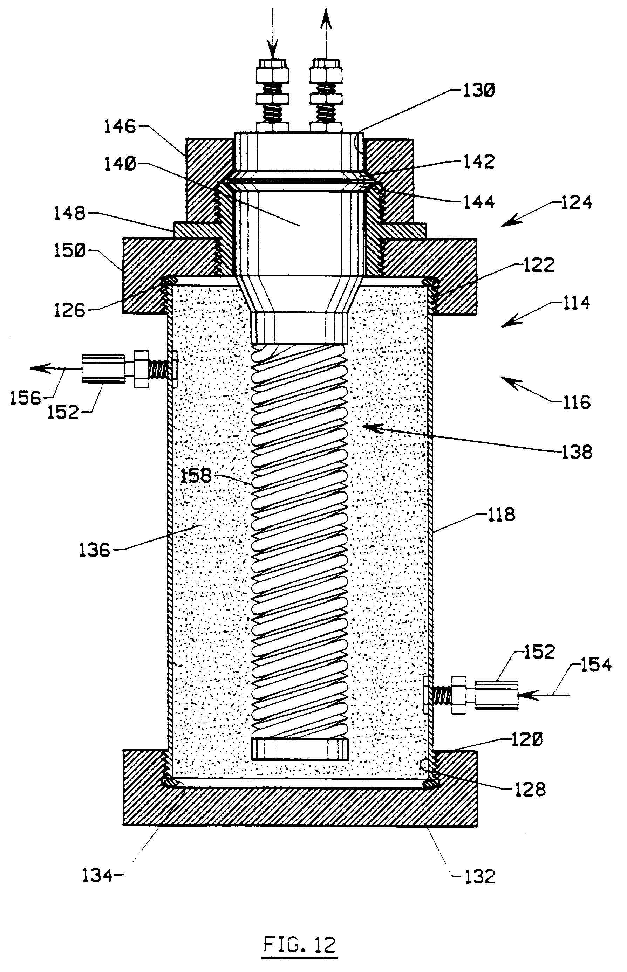

A preferred construction is shown in Figure 12, wherein the apparatus 114 comprises an outer vessel assembly 116 including a hollow cylindrical member 118 which is externally threaded at a first end 120 and at a second end 122, and further including a drilled-through tube to pipe adapter assembly 124 which screws securely onto the threaded second end 122 of the member 118. Preferably the adapter assembly 124 and the cylindrical member 118 form a gas-tight seal via an 0-ring 126 or the like disposed between the adapter assembly 124 and the cylindrical member 118.

The outer vessel assembly 116 through member 118 thus defines a first opening 128 at the first end 120 of member 118 and of the assembly 116, and through an opening 130 for the "tube" in the tube to pipe adapter assembly 124 defines a smaller second opening at a second end 122 of the assembly 116.

A removable, internally-threaded end cap 132 screws securely onto the threaded first end 120 of the member 118, and like adapter assembly 124 at the second end 122 preferably forms a gas-tight seal with the member 118 via an O-ring 134 or the like disposed in end cap 132.

Where the apparatus 114 is used for example as a fluid dryer, a preferred solid, flowable drying agent 136 (for example, granular calcium or magnesium sulfate) is contained within the outer vessel assembly 116 (comprising the hollow cylindrical member 118 and adapter assembly 124) by end cap 132, and can be simply and quickly removed from the assembly 116 by unscrewing and removing end cap 132 from the first end 120 of member 118.

To provide the membrane interface with the drying agent 136, a grooved tubular membrane support member 138 (which may desirably be of the type depicted in Figures 5-7 and 10, and which may be further modified to include temperature monitoring and/or heaters) is inserted through and secured in the second opening 130 as the "tube" in the drilled-through tube-to-pipe connection offered by adapter assembly 124, with the "pipe" in this case being the hollow cylindrical member 118.

The support member 138 is possessed of a generally cylindrical, smooth shoulder portion 140. To hold the member 138 in place in the second opening 130, then, opposed closely-fitting collar members 142 and 144 are placed around the smooth shoulder portion 140. The uppermost collar member 142 is of the split-ring type, so that on screwing members 146, 148 and 150 tightly together the members 142 and 144 supported therebetween are compressed and the uppermost member 142 compresses the smooth shoulder portion 140 at its periphery. Those skilled in the art will recognize however that other ferrule arrangements could be used for holding the member 138 in place in the manner just described, depending on the intended application of the present inventive apparatus (i.e., high pressure applications versus low pressure applications).

Those skilled in the art will also recognize that other considerably different constructions could be employed for placing the support member 138 in the hollow cylindrical member 118. For example, threads could be provided on the shoulder portion 140 of a member 138, and the member 138 joined to the assembly 116 via a threaded opening in an end cap at the second end 122 of member 118, with the end cap in turn being internally threaded and screwed onto the member 118 at its second end 122. Alternatively, the end cap and member 118 in such an embodiment could be consolidated into a hollow cylindrical outer vessel having a first end like the first end 120 of dryer 114, but having a second end which is closed but for a smaller threaded opening therethrough in which the member 138 can be inserted and secured.

In still other embodiments which may be appropriate for particular applications and uses of the apparatus 114, the support member 138 could be dedicated to this use and glued, welded or otherwise affixed in an opening in an end cap, an adapter assembly or in the closed second end of an outer vessel. Still further, it may be appropriate in some circumstances to eliminate the end cap 132 over the first end 120 of the member 118, while providing an opening in an otherwise-closed second end in which the member 138 can be permanently affixed. The device would then be constructed essentially like an oil filter, and would be disposed of as a unit.

In the preferred embodiment of the apparatus shown in Figure 12, the apparatus 114 having a solid drying agent 136 incorporated therein is further comprised of means for purging unwanted atmospheric gases from the outer vessel assembly 116 at least prior to placing the apparatus 114 in operation, so that a high purity of dry fluid delivery may be obtained from the apparatus/dryer 114.

This purging means may be in the form of septa needle ports, for example, or may as shown in Figure 12 be in the form of Swagelok™-type tube-to-pipe male connectors 152 whereby a flow of a dry purging gas may be communicated to and from the assembly 116. Corresponding flows of a purge gas into and from the dryer 114 are represented by arrows 154 and 156, respectively. In other, preferred embodiments, the connectors 152 are coupled with valves for blocking off the assembly 116 after a purging of the assembly 116 has occurred. The dry purging fluid could have a separate source, or could simply and preferably comprise a portion of the dry fluid proceeding from the dryer 114. Where a flow-through dessicant is to be employed, of course, the connectors 152 could serve as an appropriate entrance and exit for the flow-through dessicant.

While much of the foregoing description has focused on use of the apparatus 114 as a fluid dryer, as has previously been suggested other applications are equally possible wherein a species is selectively removed from a fluid via a membrane 158. Those skilled in the art will be well able to conceive of a number of such applications. For example, the selective removal of ammonia from a gas could be accomplished by using a silicone rubber membrane surrounded by an absorbent packing of charcoal or a material chemically reactive with ammonia, for example a low vapor pressure, phosphoric acid solution which would form ammonium phosphate with the ammonia. Carbon dioxide could be selectively removed from a gas by surrounding the membrane with Ascarite™ sodium hydroxide-coated silica from Union Carbide, which scavenges carbon dioxide selectively and reversibly. As a further example, oxygen could be removed from a fluid by surrounding the membrane with barium metal catalyst that irreversibly reacts with the oxygen to form barium oxide.

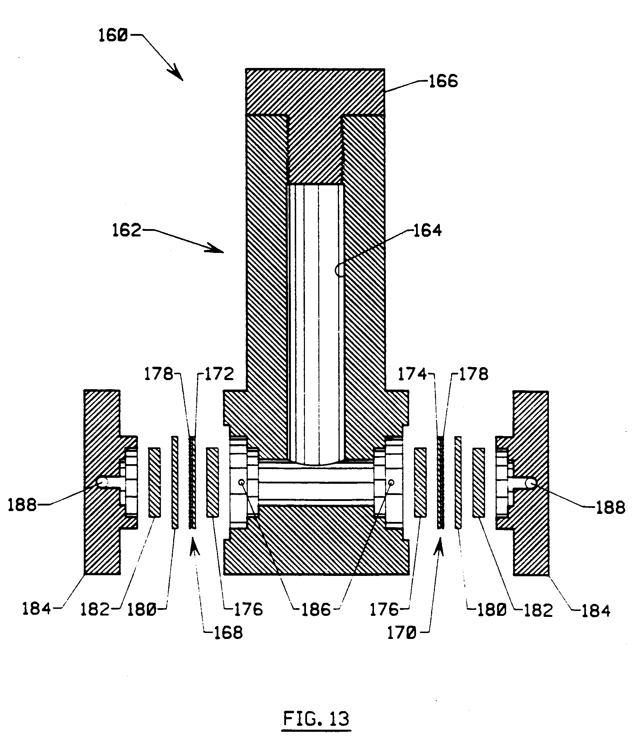

Another possible application of the grooved support members is illustrated in Figures 13-15. This application has been briefly mentioned herein previously, and relates to self-contained gas chromatographic apparatus or self-contained, portable gas chromatographic apparatus.

The electrolytic hydrogen carrier gas generator employed therein can be broadly described as a membrane-based microelectrolysis cell of negligible internal dead volume, and allows pressure and flow control over the generated hydrogen carrier gas via control over the electrolysis current supplied to the cell. The rate of hydrogen carrier gas production by the generator will generally be matched to meet the requirements of a capillary column, e.g., from about 2 to about 8 cubic centimeters per minute at atmospheric pressure or a pressure just slightly above atmospheric and at ambient temperatures of about 20 degrees Celsius.

The generator is illustrated in a preferred embodiment 160 in Figure 13, and comprises an inverted T-shaped member 162 defining a central cavity 164 therein for containing the fluid to be electrolyzed to produce the hydrogen carrier gas, with such fluid preferably comprising simply an electrolyte in distilled or deionized water. A threaded cap 166 at the top of the member 162 is removable to allow water to be added when necessary.

On either "arm" of the inverted T-shaped member 162 are electrode/membrane assemblies 168 and 170 which employ a cation exchange membrane 172 and anion exchange membrane 174, respectively. These assemblies 168 and 170 are essentially mirror images of one another, and comprise from the interior of the member 162 outward a porous support 176 which may suitably be constructed of a poly(vinylidene fluoride) material, the cation exchange membrane 172 or anion exchange membrane 174, a platinum wire mesh electrode 178, a porous but hydrophobic film 180 which can suitably be poly(tetrafluoroethylene), and a second porous support 182 which can be identical to the support 176.

Plug members 184 contain the assemblies 168 and 170 in position, and can be removed for replacing one or more elements of the assemblies 168 and 170 as necessary. Where gas leaks develop, for example, because of the comparative rigidity of an exchange membrane, a fluoroelastomeric gasket (not shown) can optionally be interposed between the support 176 and the adjacent exchange membrane 172 or 174. Electrical connection between a voltage source (not shown) and the wire mesh electrodes 178 is provided through holes 186, while tubing for collecting and conveying the generated hydrogen and oxygen is joined to the plug members 184 via holes 188.

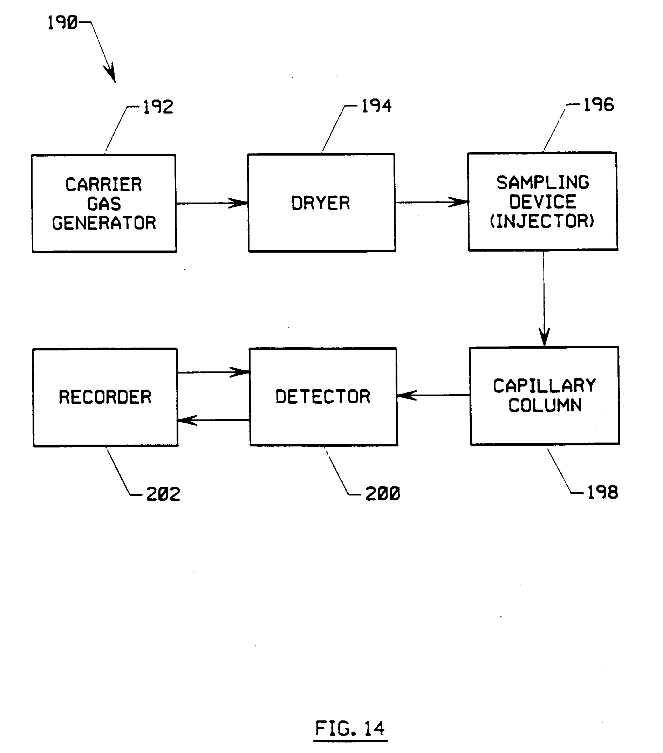

A general schematic is provided in Figure 14 for a self-contained or self-contained, portable gas chromatographic apparatus 190 constructed according to the present invention. A membrane-based microelectrolysis cell 192 generates high purity hydrogen and is characterized by negligible internal dead volume, with a preferred embodiment of the cell 192 being the embodiment 160 shown in Figure 13. In combination with the carrier gas generator 192 are a fluid dryer 194 which is preferably a membrane-based fluid dryer and especially a membrane-based fluid dryer of the type described in conjunction with Figure 12, a sample injector or other sampling device 196, a capillary GC column 198, and a detector 200.

It should be noted that the fluid dryer 194 of this self-contained or self-contained, portable gas chromatographic apparatus is not strictly limited to membrane-based devices, even while a membrane-based fluid dryer as shown in Figure 12 is especially preferred because of its ease of use, compactness, and capability of drying the required volumes of a carrier gas without adversely affecting the purity of the carrier gas.

For example, it has been known in the art to separate hydrogen with a high degree of selectivity from other gaseous impurities (e.g., H₂O, O₂) by flowing the hydrogen and accompanying impurities through a hot palladium tube. It should thus be possible in the apparatus 190 to employ a generator 192, a hot palladium hydrogen separator/dryer 194 and preferably a separate fluid dryer 194 (which may suitably be as shown in Figure 12) for oxygen generated in generator 192 via the electrolysis of a fluid comprising an electrolyte in distilled or deionized water. Those skilled in the art may be aware of still other devices which could be used to separate generated hydrogen in high purities from other products of or materials from the electrolytic generation of hydrogen, and it is considered that these devices may be suitable as well.

A recorder 202 associated with the detector 200 may be located with the other elements, or preferably will be remotely located and will receive data from the detector via telemetry or the like. The sample injector 196, column 198, detector 200 and recorder 202 can be those conventionally employed in the previously-known self-contained or self-contained, portable GC apparatus, and in particular the GC apparatus of the present invention can employ any conventionally known detector, for example a thermal conductivity detector, an electron capture detector, a photo ionization detector, a chemiluminescence detector, a Hall electrolytic conductivity detector, a flame ionization detector or a combination of two or more of these.

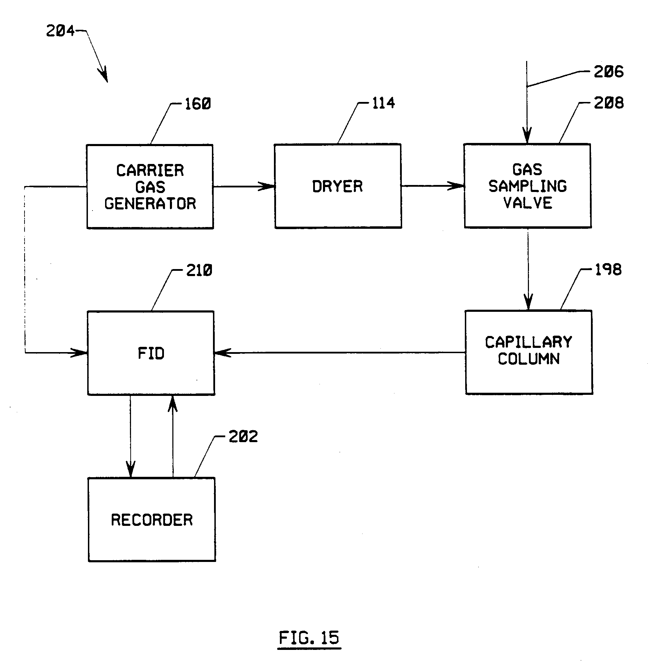

A preferred embodiment 204 of a self-contained or self-contained, portable GC apparatus is schematically illustrated in Figure 15, and includes an electrolytic hydrogen carrier gas generator 160 as shown in Figure 13 with a fluid dryer 114 as shown in Figure 12. Automated analysis of a sample 206 is enabled by a conventional, commercially-available sampling valve 208. The hydrogen generated by the generator 160 and dried in fluid dryer 114 serves as a carrier gas, and along with the oxygen generated in generator 160 serves also as a detector gas, for example, for a flame ionization detector (FID) 210. Alternatively, some or all of the hydrogen and oxygen for the FID could be produced by a second generator 160.

The sampling valve 208 can draw directly from a process stream to be analyzed, or in a preferred variation on the illustrated embodiment 204 can draw from a separate membrane-based sampling device of the design shown in Figures 5-7 and 10, with such device possibly including internal temperature monitoring and/or heating elements. In still another variation the sampling device of Figures 5-7 and 10 (equipped or not equipped with internal heaters, thermocouples, etc.) can be used in place of the sample loop of a conventional sampling valve 208.

An additional feature of the preferred embodiment 204 is the use as a capillary column support of a grooved support member of a type described above which has been equipped with internal heating and temperature monitoring means, with the grooved support member design of Figures 5-7 being especially preferred. The grooved support member provides a conveniently compact, temperature-controlled support for the otherwise conventional capillary column 198 of apparatus 204.

The foregoing clearly is indicative of the versatility of the present technology, but as clearly is not an exhaustive treatment of the possible applications and uses of the technology.

Several aspects of the present invention are further illustrated in the following examples:

### Example 1

Trace levels of chloroform (about 0.1 to about 1.0 parts per million by weight) were found to be present in a hot (50 to 60 degrees Celsius) aqueous plant stream containing from 2 to 3 weight percent of hydrochloric acid and suspended particulate matter.

For this example, a comparison was made between a stream analysis as performed by a laboratory purge and trap instrument set up in accordance to United States Environmental Protection Agency Method 601/602, "Analysis of Volatile Organics in Water", and an analysis as performed by a preferred, valve-insertable apparatus corresponding to Figures 5-7 and 10 in combination with a conventional laboratory gas chromatograph.

The valve-insertable apparatus for this example employed a silicone rubber capillary membrane. The membrane length was 1.83 meters (six (6) feet) and the membrane had an outside diameter of 0.635 mm (0.025 inches) and an inside diameter of 0.305 mm (0.012 inches), for an effective internal volume of about 0.1 ml. The membrane was coupled to a conventional laboratory gas chromatograph via 0.3 mm (1/8 inch) stainless steel tubing, and the apparatus was fully immersed in the process stream through an open trough, using a 1.83 meters-long (six (6) feet) piece of 2.5 cm. (1 inch) piping as a stinger.

Nitrogen was circulated through the central lumens of the membrane at 6 cubic centimeters per minute, and carried to an automated sample valve. The sample loop was injected onto the chromatographic column, and stream components were separated and quantitated on a flame ionization detector.

Samples for the purge and trap analysis were captured in liquid-full, virgin glass bottles with polymeric seal tops. The fresh samples were plunged into an ice bath and transported immediately to the site of the purge and trap apparatus, whereupon the samples were loaded directly into the purge and trap auto-sampler and analyzed.

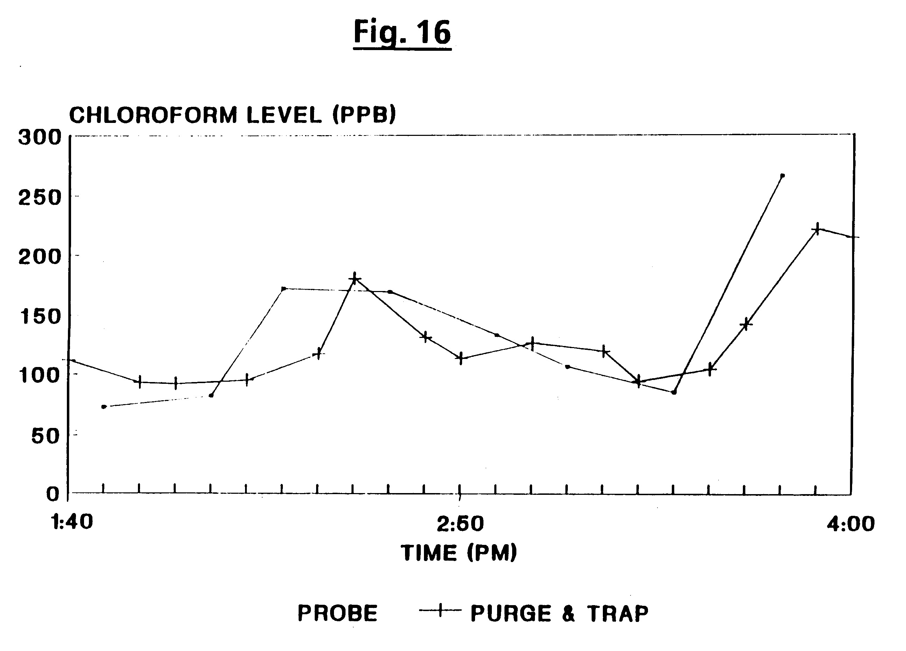

Figure 16 shows the quantitated levels of chloroform obtained by purge and trap analysis and by an apparatus of the present invention, and suggests that on-line analysis using the sampling apparatus of the present invention should be an acceptable alternative to the off-line and significantly more inconvenient purge and trap analysis suggested by the United States Environmental Protection Agency (EPA).

### Example 2

An azeotrope was formed in a process stream between 1,3 butadiene and trace levels of acetaldehyde and acetone. To remove these trace level impurities and permit recovery of the 1,3 butadiene, it was proposed to contact the crude 1,3 butadiene process stream with water, whereby the carbonyl-containing impurities could be extracted into the aqueous phase. Conventional direct analysis was attempted (at 0.48 N/m² (70 lbs.) of pressure and 60 degrees C.) in a conventional on-line gas chromatograph of the crude and purified 1,3 butadiene process streams to monitor and control the extraction/separation, but was plagued with plugging and fouling problems due to polymerization of the 1,3 butadiene and the presence of coke-like particles.

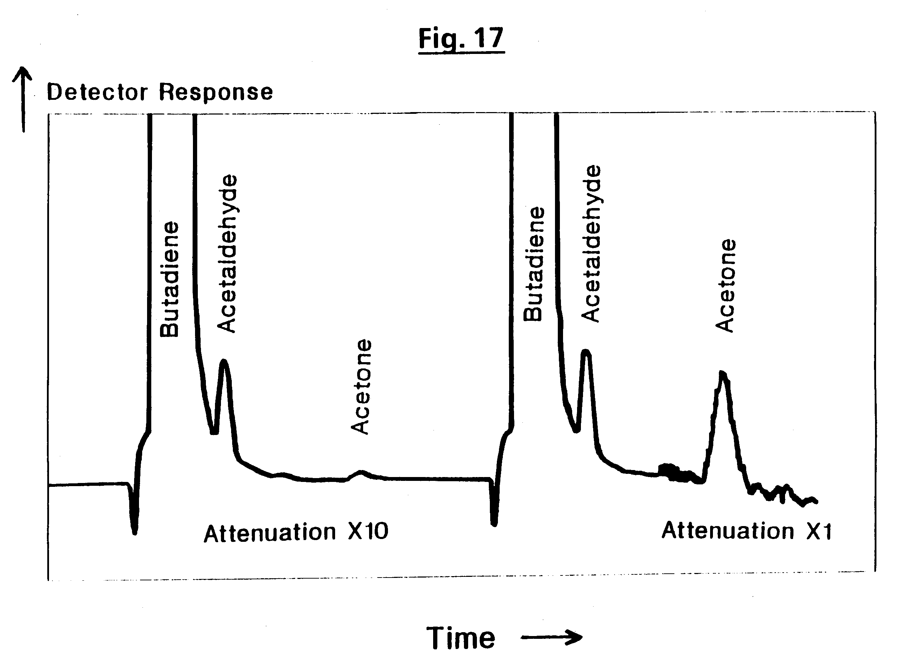

A capillary membrane-based sampling apparatus of the present invention was constructed as shown in Figures 1-4 and as described herein, but rather than the silicone rubber membrane of Example 1 employed a Teflon™ FEP copolymer membrane tubing (1.83 m (six (6) feet) long, 0.635 mm (0.025 inch) o.d., 0.305 mm (0.012 inch) id., 0.1 ml internal volume). The probe was employed in a flow cell apparatus of the type shown in Figure 11, and an emulsified slipstream of water and 1,3 butadiene (essentially water-saturated 1,3 butadiene) was passed through the flow cell. Nitrogen gas, flow controlled at 6 cc/min., was continuously circulated through the probe and delivered to a sampling valve in a gas chromatograph as in Example 1. The sample loop on the sampling valve was injected onto the column of the GC, and separated and enabled the quantification of the 1,3 butadiene, acetaldehyde and acetone in the crude and purified process streams as shown in Figure 17.

### Example 3

An incoming waste stream to a biological wastewater treatment facility was a potential source of benzene, a tightly permitted, essentially non-biodegradable pollutant. With the dilution from other incoming wastewater streams, it was determined that the concentration of benzene in the particular waste stream should not exceed 2 parts per million by weight.

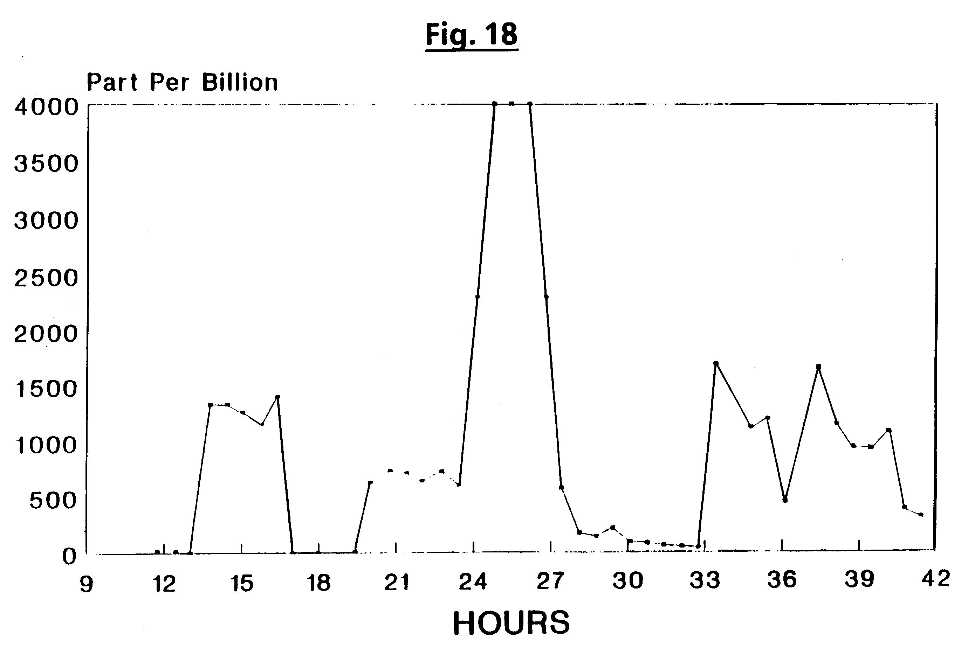

A capillary membrane sampling device was constructed for this example as in Figures 1-4 and as in Example 2 above. This device was inserted through a 15.2 cm (six (6) inch) gate valve directly into the waste stream for monitoring (with a conventional gas chromatograph) the levels of benzene therein. Figure 18 shows the concentrations of benzene in the waste stream over a two day period of such monitoring.

An excursion in the benzene level of the stream was observed at between 21 and 26 hours, with the probe and associated GC tracking the rise in benzene concentration. The plant producing the waste stream was notified, and at 27 hours the source plant removed all possible benzene sources to the stream. The benzene concentration thereafter was observed to fall to near zero. At 31 hours, the source plant informed wastewater treatment plant personnel that the upset had been diagnosed and corrected, and the various flows into the waste stream were resumed. The membrane sampling probe and associated gas chromatograph subsequently confirmed the levels of benzene as returning to appropriate levels, indicating that the problem had indeed been remedied at the source plant.

## Claims

1. An apparatus suitable for use in determining the presence and/or concentration of one or more selected materials in a matrix stream or aggregation of flowable materials within a process pipe, reactor or other process vessel, for isolating or removing a selected species from a fluid passing through the lumens of a length of permeation or diffusion membrane tubing, or for supporting a capillary column in a self-contained or self-contained, portable gas chromatographic apparatus, and which comprises:
a support member (40) having a groove (56) defined therein; and
a conduit positioned and supported substantially wholly within at least a portion of the groove in the support member whereby the outside surface of the conduit is substantially protected from adverse external influences over such portion, said conduit having the form of one of permeation or diffusion membrane tubing (52), optical fiber or a capillary column (198).

2. An apparatus as defined in Claim 1, wherein the conduit is positioned and supported wholly within the groove.

3. An apparatus as defined in Claim 1, wherein the support member defines a second groove (62) therein in communication with the first groove.

4. An apparatus as defined in Claim 3, wherein the conduit is positioned and supported wholly within the first and second grooves.

5. An apparatus as defined in Claim 3 or Claim 4, wherein the first and second grooves of the support member consist of alternating helical flights (56,62) of a double lead threaded support member (40), and wherein the conduit is positioned generally in the troughs of such flights and is flanked by the walls defining the flights of the support member, the crests of the walls on either side of the conduit in a respective flight extending above the trough and laterally from the support member to a greater extent than the conduit.

6. An apparatus as defined in Claim 1, wherein the apparatus is adapted and sized to be insertable through a standard-size valve (72) into a process pipe, reactor or other process vessel (74) for determining the presence and/or concentration of one or more selected materials in a matrix stream or aggregation of flowable materials (76) in such process pipe, reactor or other process vessel.

7. An apparatus as defined in Claim 6, further comprising analytical apparatus (200) associated and in communication with the conduit.

8. An apparatus as defined in Claim 7, further comprising apparatus for redirecting the flow and/or for altering the composition of the matrix stream or aggregation of materials responsive to the presence of a given concentration of the one or more selected materials in said matrix stream or aggregation.

9. An apparatus as defined in any one of Claims 1, 6, 7 or 8, wherein the support member is constructed of a thermally conductive material and the apparatus further includes temperature monitoring or regulating means within the support member.

10. An apparatus as defined in Claim 9, wherein the support member defines first and second grooves therein in the form of alternating helical flights (56, 62) in a double lead threaded arrangement on the support member, and wherein the conduit is positioned generally in the troughs of such alternating flights and is flanked by the walls defining such flights.

11. An apparatus as defined in Claim 9 or as defined in Claim 10, wherein the conduit is a capillary gas chromatographic column (198) and further wherein the apparatus is part of a self-contained apparatus for capillary gas chromatography (190), such self-contained apparatus for capillary gas chromatography additionally comprising in combination an electrolytic hydrogen carrier gas generator (160), a fluid dryer (194) in which residual moisture is drawn from the generated hydrogen carrier gas, a sampling device (196) for placing a sample in the dry hydrogen carrier gas stream and employing the capillary gas chromatographic column for resolving the sample in the dry hydrogen carrier gas stream into its component materials, and a detector (200) in communication with an apparatus as defined in Claim 9 or Claim 10 for detecting these component materials.

12. An apparatus as defined in Claim 11, wherein the fluid dryer (194) in the self-contained gas chromatographic apparatus (190) is a membrane-based fluid dryer (114), whereby a drying agent (136) positioned or flowing on one side of the membrane (158) draws moisture from the hydrogen carrier gas flowing on the other side of the membrane, and further wherein such membrane-based fluid dryer (114) comprises:
an outer vessel or outer vessel assembly (116) having first (128) and second (130) openings defined on first (120) and second (122) respective ends of the vessel or vessel assembly;
a removable end cap (132) placed securely over the first opening whereby a drying agent (136) placed or flowing within the vessel (116) is contained by the end cap at said first end (120);
a support member (138) inserted through and secured in the second opening (130) of the vessel or vessel assembly (116) and having a groove (56, 62) defined therein; and
a tubular membrane (158) supported in the groove (56, 62) in the support member and defining first and second ends which can be placed in fluid communication with the electrolytic hydrogen carrier gas generator (160) and the sampling device (196), respectively.

13. An apparatus as defined in Claim 12, wherein:
the groove in said support member of said membrane-based fluid dryer comprises a double-lead flight threaded portion (42) of the support member (138) which is traversed by the membrane (158) in alternating flights (56,62) from a first end (54) of the support member to a second end (58) thereof and back again, such alternating flights communicating via an S-shaped curve (60) defined in said second end (58) of said support member;
and further wherein the support member defines internal channels (46, 48) therein at the first end which communicate with the alternating flights (56, 58) of the double-lead flight threaded portion (42) of the support member, and through which the membrane extends to define said first and second membrane ends.

14. An apparatus as defined in Claim 12 or in Claim 13, wherein the support member (138) is constructed of a thermally conductive material and the dryer (114) further includes temperature monitoring or regulating means within said support member.

15. An apparatus as defined in Claim 11, wherein the electrolytic hydrogen carrier gas generator (160) is characterized by negligible internal dead volume when filled and in use, whereby the flowrate of hydrogen from the generator may be controlled by controlling the flow of current in the generator.

16. An apparatus as defined in Claim 15, wherein the electrolytic carrier gas generator (160) comprises:
a T-shaped member (162) which defines a central cavity (164) therein for containing a fluid to be electrolyzed to produce the hydrogen carrier gas;
an electrode/membrane assembly (168) positioned on one "arm" of the T-shaped member which comprises in sandwiched construction, from the central cavity (164) outward,
a porous, wettable support (176),
a cation exchange membrane (172),
a platinum wire mesh electrode (178),
a porous, hydrophobic film (180), and
a second porous, wettable support (182)
wherein holes (186) are defined in the T-shaped member (162) for making an electrical connection with the platinum wire mesh electrode (178);
an electrode/membrane assembly (170) positioned on the other "arm" of the T-shaped member (162) which comprises in sandwiched construction, from the central cavity (164) outward,
a porous, wettable support (176),
an anion exchange membrane (174),
a platinum wire mesh electrode (178),
a porous, hydrophobic film (180), and
a second porous, wettable support (182),
wherein holes (186) are defined in the T-shaped member for making an electrical connection with the platinum wire mesh electrode (178) of this assembly (170); and
plug members (184) for holding the cation and anion electrode/membrane assemblies (168, 170) in position in the arms of the T-shaped member (162), and defining holes (188) therein for permitting the removal of generated hydrogen and oxygen from the generator (160).

17. An apparatus as defined in Claim 11, wherein the sampling device (196) is a sampling valve with sample loop (208).

18. An apparatus as defined in Claim 17, wherein the sample loop of the sampling valve (208) is replaced with a membrane-based device (38) including a support member (40) having a double-lead flight threaded portion (42), a tubular membrane (52) supported within the flights (56, 62) in such portion, and an S-shaped curve (60) defined in one end (58) of the support member which joins the alternating flights (56, 62) of the double lead flight threaded portion (42) in communication so that the membrane may traverse the length of the support member (40) and back through such alternating flights and such S-shaped curve (60).

19. An apparatus as defined in Claim 18, wherein the sampling valve (208) draws directly from a process stream.

20. An apparatus as defined in Claim 18, wherein the sampling valve (208) draws from a separate membrane-based sampling device (38).

21. An apparatus as defined in Claim 20, wherein the separate membrane based sampling device (38) includes a support member (40) having a double-lead flight threaded portion (42), a tubular membrane (52) supported within the flights (56, 62) in such portion, and an S-shaped curve (60) defined in one end (58) of the support member (40) which joins the alternating flights (56, 62) of the double lead flight threaded portion (42) in communication so that the membrane may traverse the length of the support member and back through such alternating flights and such S-shaped curve (60).

## Patentansprüche

1. Apparat, geeignet zur Verwendung für die Bestimmung der Anwesenheit und/oder Konzentration eines oder mehrerer ausgewählter Materialien in einem Matrixstrom oder einer Aggregation fließfähiger Materialien innerhalb eines Prozeßrohres, Reaktors oder anderen Reaktionsgefäßes zur Isolierung oder Entfernung eines ausgewählten Stoffes aus einem fluiden Strom, der durch die Lumina einer Länge eines Permeations- oder Diffusionsmembranschlauches strömt, oder zum Tragen einer Kapillarsäule in einem in sich abgeschlossenen oder in einem in sich abgeschlossenen und tragbaren Gaschromatographen, enthaltend:
ein Trägerelement (40) mit einer darin definierten Rille (56); und
eine Leitung, die sich im wesentlichen vollständig innerhalb mindestens eines Abschnitts der Rille in dem Trägerelement befindet und dort im wesentlichen vollständig getragen wird, wodurch die nach außen gerichtete Oberfläche der Leitung im wesentlichen gegen ungünstige äußere Einflüsse über diesem Abschnitt geschützt wird und wobei die Leitung die Form eines Permeations- oder Diffusionsmembranschlauches (52), einer optischen Faser oder einer Kapillarsäule (198) hat.

2. Apparat, definiert wie in Anspruch 1, wobei die Leitung sich vollständig in der Rille befindet und in ihr getragen wird.

3. Apparat, definiert wie in Anspruch 1, wobei das Trägerelement eine zweite Rille (62) darin definiert, die mit der ersten Rille in Verbindung steht.

4. Apparat, definiert wie in Anspruch 3, wobei die Leitung vollständig innerhalb der ersten und zweiten Rille liegt und in ihnen getragen wird.

5. Apparat, definiert wie in Anspruch 3 oder Anspruch 4, wobei die erste und die zweite Rille des Trägerelements aus alternierenden Schraubengängen (56, 62) eines mit einem doppelgängigen Gewinde versehenen Trägerelements (40) bestehen, wobei die Leitung im allgemeinen in den Vertiefungen dieser Gänge liegt und von den Wänden flankiert ist, die die Gänge des Trägerelements definieren, und wobei sich die Kammlinien der Wände an beiden Seiten der Leitung in einem bestimmten Gang über die Vertiefung hinaus erstrecken und sich von dem Trägerelement aus in höherem Maße seitlich erstrecken als die Leitung.

6. Apparat, definiert wie in Anspruch 1, wobei der Apparat angepaßt und so dimensioniert ist, daß er durch ein Rohr (72) mit Standardgröße in ein Prozeßrohr, einen Reaktor oder ein anderes Reaktionsgefäß (74) eingesetzt werden kann, um die Anwesenheit und/oder Konzentration eines oder mehrerer ausgewählter Materialien in einem Matrixstrom oder einer Aggregation fließfähiger Materialien (76) in dem Prozeßrohr, dem Reaktor oder dem anderen Reaktionsgefäß zu bestimmen.

7. Apparat, definiert wie in Anspruch 6, weiterhin ein Analysengerät (200) enthaltend, das mit der Leitung verbunden ist und mit ihr kommuniziert.

8. Apparat, definiert wie in Anspruch 7, weiterhin enthaltend eine Vorrichtung zum Umlenken des Flusses und/oder zur Veränderung der Zusammensetzung des Matrixstromes oder der Aggregation von Materialien, wobei die Vorrichtung auf die Anwesenheit oder eine gegebene Konzentration des einen oder mehrerer ausgewählter Materialien in dem Matrixstrom oder der Aggregation anspricht.

9. Apparat, definiert wie in jedem der Ansprüche 1, 6, 7 oder 8, wobei das Trägerelement aus einem thermisch leitfähigen Material konstruiert ist und der Apparat weiterhin innerhalb des Trägerelements Mittel zur Überwachung oder Regelung der Temperatur enthält.

10. Apparat, definiert wie in Anspruch 9, wobei das Trägerelement eine erste und eine zweite Rille darin in Form von alternierenden Schraubengängen (56, 62) in einer doppelgängigen Gewindeanordnung auf dem Trägerelement definiert und wobei die Leitung im allgemeinen in den Vertiefungen der alternierenden Gänge liegt und von den Wänden flankiert ist, die die Gänge definieren.

11. Apparat, definiert wie in Anspruch 9 oder definiert wie in Anspruch 10, wobei die Leitung eine kapillare Gaschromatographiesäule (198) und weiterhin der Apparat Bestandteil eines in sich abgeschlossenen Gerätes (190) für kapillare Gaschromatographie ist, wobei das abgeschlossene Gerät für kapillare Gaschromatographie weiterhin in Kombination enthält einen elektrolytischen Generator (160) für Wasserstoffträgergas, einen Trockner (194) für fluide Stoffe, in dem restliche Feuchtigkeit aus dem erzeugten Wasserstoffträgergas entfernt wird, eine Probenahmevorrichtung (196), um eine Probe in den trockenen Wasserstoffträgergasstrom zu bringen, wobei man die kapillare Gaschromatographiesäule zur Zerlegung der Probe in dem trockenen Wasserstoffträgergasstrom in seine Bestandteile benutzt, und das Gerät einen Detektor (200) enthält, der mit einem Apparat zur Entdeckung dieser Bestandteile kommuniziert, wie er in den Ansprüchen 9 oder 10 definiert ist.

12. Apparat, definiert wie in Anspruch 11, wobei der Trockner (194) für fluide Stoffe in dem in sich abgeschlossenen Gaschromatographiegerät (190) ein auf einer Membran beruhender Trockner (114) für fluide Stoffe ist, in dem ein Trocknungsmittel (136) auf der einen Seite der Membran (158) angeordnet ist oder fließt und die Feuchtigkeit aus dem auf der anderen Seite der Membran strömenden Wasserstoffträgergasstrom zieht, und wobei weiterhin der auf einer Membran beruhende Trockner (114) für fluide Stoffe enthält:
ein äußeres Gefäß oder einen äußeren Gefäßaufbau (116) mit einer ersten (128) und einer zweiten (130) Öffnung, die am ersten (120) bzw. zweiten (122) Ende des Gefäßes oder des Gefäßaufbaus definiert sind;
eine entfernbare Endkappe (132), die sicher über der ersten Öffnung angebracht ist, wodurch ein Trocknungsmittel (136), das sich innerhalb des Gefäßes (116) befindet oder darin fließt, durch die Endkappe an dem ersten Ende (120) eingeschlossen wird;
ein Trägerelement (138), das durch die zweite Öffnung (130) des Gefäßes oder des Gefäßaufbaus (116) eingesetzt und in dieser gesichert ist und eine darin definierte Rille (56, 62) besitzt; und
eine röhrenförmige Membran (158), die in der Rille (56, 62) in dem Trägerelement getragen wird und erste und zweite Enden definiert, die in fluide Kommunikation mit dem elektrolytischen Generator (160) für Wasserstoffträgergas bzw. mit der Probenahmevorrichtung (196) gebracht werden können.

13. Apparat, definiert wie in Anspruch 12, wobei
die Rille in dem Trägerelement des auf einer Membran beruhenden Trockners für fluide Stoffe einen mit doppelgängigem Gewinde versehenen Teil (42) des Trägerelements (138) einschließt, in dem die Membran (158) in alternierenden Gängen (56, 62) quer zu dem Teil (42) von einem ersten Ende (54) des Trägerelements bis zu einem zweiten Ende (58) desselben geführt und wieder zurückgeführt wird, wobei die alternierenden Gänge über eine in dem zweiten Ende (58) des Trägerelements definierte S-förmige Kurve (60) kommunizieren;
und wobei weiterhin das Trägerelement an dem ersten Ende interne Kanäle (46, 48) darin definiert, die mit den alternierenden Gängen (56, 58) des mit einem doppelgängigen Gewinde versehenen Teils (42) des Trägerelements kommunizieren und durch die sich die Membran erstreckt, um das erste und das zweite Ende der Membran zu definieren.

14. Apparat, definiert wie in Anspruch 12 oder in Anspruch 13, wobei das Trägerelement (138) aus einem thermisch leitfähigen Material konstruiert ist und der Trockner (114) weiterhin innerhalb des Trägerelements Mittel zur Überwachung oder zur Regelung der Temperatur enthält.

15. Apparat, wie in Anspruch 11 definiert, wobei der elektrolytische Generator (160) für Wasserstoffträgergas gekennzeichnet ist durch vernachlässigbaren internen Totraum im gefüllten Zustand und während des Gebrauchs, so daß die Strömungsgeschwindigkeit des Wasserstoffs aus dem Generator durch Regelung der Stromstärke in dem Generator geregelt werden kann.

16. Apparat, definiert wie in Anspruch 15, wobei der elektrolytische Generator (160) für das Trägergas enthält:
ein T-förmiges Element (162), das einen zentralen Hohlraum (164) darin zur Aufnahme einer Flüssigkeit definiert, die elektrolysiert werden soll, um das Wasserstoffträgergas zu erzeugen;
einen Elektroden/Membran-Aufbau (168), der an einem "Arm" des T-förmigen Elements angeordnet ist und der in einer schichtförmigen Konstruktion von dem zentralen Hohlraum (164) aus nach außen enthält:
einen porösen, benetzbaren Träger (176),
eine Kationenaustauschmembran (172),
eine Platindrahtnetzelektrode (178),
einen porösen, hydrophoben Film (180) und
einen zweiten porösen, benetzbaren Träger (182),
wobei in dem T-förmigen Element (162) Löcher (186) definiert sind, um eine elektrische Verbindung mit der Platindrahtnetzelektrode (178) zu schaffen;
einen Elektroden/Membran-Aufbau (170) der am anderen "Arm" des T-förmigen Elements (162) angeordnet ist und der in einer schichtförmigen Konstruktion von dem zentralen Hohlraum (164) aus nach außen enthält
einen porösen, benetzbaren Träger (176),
eine Anionenaustauschmembran (174),
eine Platindrahtnetzelektrode (178),
einen porösen, hydrophoben Film (180) und
einen zweiten porösen, benetzbaren Träger (182),
wobei in dem T-förmigen Element Löcher (186) definiert sind, um eine elektrische Verbindung mit der Platindrahtnetzelektrode (178) dieses Aufbaus (170) zu schaffen; und
Verschlußelemente (184), die den kationischen und den anionischen Elektroden/Membran-Aufbau (168, 170) in ihren Positionen in den "Armen" des T-förmigen Elements (162) halten und Löcher (188) darin definieren, die die Entfernung des erzeugten Wasserstoffs und Sauerstoffs aus dem Generator (160) gestatten.

17. Apparat, definiert wie in Anspruch 11, wobei die Probenahmevorrichtung (196) ein Proberohr mit Probeschleife (208) ist.

18. Apparat, definiert wie in Anspruch 17, wobei die Probeschleife des Proberohres (208) durch eine Vorrichtung (38) auf der Grundlage einer Membran ersetzt ist, wobei die Vorrichtung enthält ein Trägerelement (40) mit einem mit doppelgängigem Gewinde versehenen Teil (42), eine innerhalb der Gänge (56, 62) dieses Teils getragene schlauchförmige Membran (52) und eine S-förmige Kurve (60), die in einem Ende (58) des Trägerelements definiert ist und die alternierenden Gänge (56, 62) des mit einem doppelgängigen Gewinde versehenen Teils (42) so kommunizierend verbindet, daß die Membran quer zu dem Teil (42) über die Länge des Trägerelements (40) hin- und durch die alternierenden Gänge und durch die S-förmige Kurve (60) wieder zurückgeführt werden kann.

19. Apparat, definiert wie in Anspruch 18, wobei das Proberohr (208) die Probe direkt aus einem Prozeßstrom abzieht.

20. Apparat, definiert wie in Anspruch 18, wobei das Proberohr (208) die Probe aus einer getrennten Probenahmevorrichtung (38) auf der Grundlage einer Membran abzieht.

21. Apparat, definiert wie in Anspruch 20, wobei die getrennte Probenahmevorrichtung (38) auf der Grundlage einer Membran enthält ein Trägerelement (40) mit einem mit doppelgängigem Gewinde versehenen Teil (42), eine innerhalb der Gänge (56, 62) dieses Teils getragene schlauchförmige Membran (52) und eine S-förmige Kurve (60), die in einem Ende (58) des Trägerelements (40) definiert ist und die alternierenden Gänge (56, 62) des mit einem doppelgängigen Gewinde versehenen Teils (42) derart kommunizierend verbindet, daß die Membran quer zu dem Teil (42) über die Länge des Trägerelements hin- und durch die alternierenden Gänge und durch die S-förmige Kurve (60) wieder zurückgeführt werden kann.

## Revendications

1. Appareil utilisable pour déterminer la présence et/ou la concentration d'une ou plusieurs matières sélectionnées dans un flux matriciel ou un agrégat de matériaux fluides à l'intérieur d'une conduite de processus, d'un réacteur ou autre cuve de processus, pour isoler ou soutirer une espèce sélectionnée d'un fluide traversant les lumens d'une certaine longueur d'une membrane tubulaire de perméation ou de diffusion, ou pour supporter une colonne capillaire dans un appareil de chromatographie en phase gazeuse autonome ou autonome et portable et qui comprend :
un élément support (40) dans lequel est définie une rainure (56) ; et
une conduite disposée et supportée sensiblement en totalité dans au moins une partie de la rainure de l'élément support de façon que la surface extérieure de la conduite soit sensiblement protégée des influences externes nuisibles sur cette partie, ladite conduite prenant la forme d'une membrane tubulaire de perméation ou de diffusion (52), d'une fibre optique ou d'une colonne capillaire (198).

2. Appareil selon la revendication 1, dans lequel la conduite est disposée et supportée en totalité à l'intérieur de la rainure.

3. Appareil selon la revendication 1, dans lequel l'élément support comprend à l'intérieur une seconde rainure (62) en communication avec la première rainure.

4. Appareil selon la revendication 3, dans lequel la conduite est disposée et supportée en totalité à l'intérieur des première et seconde rainures.

5. Appareil selon l'une des revendications 3 ou 4, dans lequel les première et seconde rainures du support forment des spires hélicoïdales alternées (56, 62) sur un élément support (40) à double filetage, et dans lequel la conduite est généralement disposée dans les creux de ces spires et bordée par les parois délimitant les spires de l'élément support, les crêtes des parois situées de chaque côté de la conduite dans une spire respective s'étendant au-dessus du creux et latéralement, en partant de l'élément support plus loin que la conduite.

6. Appareil selon la revendication 1, dans lequel l'appareil est adapté et dimensionné pour être introduit par une vanne de dimensions normalisées (72) dans une conduite de processus, un réacteur et autre cuve de processus (74) pour déterminer la présence et/ou la concentration d'une ou plusieurs matières sélectionnées dans un flux matriciel ou un agrégat de matières fluides (76) circulant dans cette conduite de processus, ce réacteur ou cette autre cuve de processus.

7. Appareil selon la revendication 6, comprenant encore un appareil d'analyse (200) associé et en communication avec la conduite.

8. Appareil selon la revendication 7, comprenant encore un appareil pour changer l'orientation du flux et/ou pour modifier la composition du flux matriciel ou de l'agrégat de matières en réponse à la présence d'une concentration donnée d'une ou plusieurs matières sélectionnées dans ledit flux matriciel ou l'agrégat.

9. Appareil selon l'une quelconque des revendications 1, 6, 7 et 8, dans lequel l'élément support est construit en une matière conductrice de la chaleur et dans lequel l'appareil comprend encore, dans l'élément support, des moyens de surveillance ou de régulation de la température.

10. Appareil selon la revendication 9, dans lequel l'élément support comprend une première et une seconde rainures en forme de spires hélicoïdales alternées (56, 62) disposées en formant un double filetage sur l'élément support, et dans lequel la conduite est généralement disposée dans les creux de ces spires alternées et bordée par les parois délimitant ces spires.

11. Appareil selon la revendication 9 ou selon la revendication 10, dans lequel la conduite est une colonne capillaire (198) d'un chromatographe en phase gazeuse et dans lequel encore l'appareil fait partie d'un chromatographe capillaire en phase gazeuse, supplémentaire, comprenant en association un générateur électrolytique (160) d'hydrogène comme gaz porteur, un dessiccateur de gaz (194) dans lequel l'humidité résiduelle du gaz porteur hydrogène est éliminée, un dispositif d'échantillonnage (196) pour introduire un échantillon dans le flux de gaz porteur hydrogène et dans lequel on emploie la colonne capillaire de chromatographie en phase gazeuse pour décomposer l'échantillon introduit dans le flux de gaz porteur hydrogène sec en ses matières composantes, et un détecteur (200) en communication avec un appareil selon l'une des revendications 9 ou 10 pour détecter ces matières composantes.

12. Appareil selon la revendication 11, dans lequel le dessiccateur de fluide (194) dans l'appareil autonome de chromatographie en phase gazeuse (190) est un dessiccateur de fluide (114) ayant pour base une membrane, dans lequel un agent dessiccateur (136) disposé ou circulant d'un côté de la membrane (158) absorbe l'humidité du gaz porteur hydrogène circulant de l'autre côté de la membrane, et dans lequel encore ce dessiccateur à fluide (114) ayant pour base une membrane comprend :
une cuve ou ensemble de cuve extérieure (116) ayant une première (128) et une seconde (130) ouvertures usinées sur une première (120) et une seconde (122) extrémités respectives de la cuve ou de l'ensemble de cuve ;
un bouchon d'extrémité amovible (132) solidement monté sur la première ouverture, de façon que l'agent dessiccateur (136) placé ou circulant dans la cuve (116) soit retenu dans le bouchon fixé sur ladite première extrémité (120) ;
un élément support (138) introduit par et fixé dans la seconde ouverture (130) de la cuve ou de l'ensemble de cuve (116), élément dans lequel est usinée une rainure (56, 62) ; et
une membrane tubulaire (158) supportée dans la rainure (56, 62) de l'élément support et ayant des première et seconde extrémités qui peuvent être mises en communication fluide avec le générateur électrolytique de gaz porteur hydrogène (160) et le dispositif d'échantillonnage (196), respectivement.

13. Appareil selon la revendication 12, dans lequel :
la rainure dudit élément support dudit dessiccateur à fluide ayant pour base une membrane constitue une partie (42) de l'élément support (138) ayant un double filetage, que la membrane (158) traverse en suivant les spires alternées (56, 62) depuis une première extrémité (54) jusqu'à une seconde extrémité (58) de l'élément support, et ensuite en sens inverse, ces spires alternées communiquant par une courbe (60) en forme de S formée dans ladite seconde extrémité (58) dudit élément support ;
et dans lequel encore l'élément support comporte à sa première extrémité des canaux internes (46, 48) qui communiquent avec les spires alternées (56, 62) du double filetage de la partie filetée (42) de l'élément support, par lesquelles passe la membrane pour définir lesdites première et seconde extrémités de membrane.

14. Appareil selon l'une des revendications 12 ou 13, dans lequel l'élément support (138) est construit en une matière conductrice de la chaleur et le dessiccateur (114) comprend encore des moyens de surveillance ou de régulation de la température à l'intérieur dudit élément support.

15. Appareil selon la revendication 11, dans lequel le générateur électrolytique de gaz porteur hydrogène (160) est caractérisé par un volume mort intérieur négligeable quand il est rempli et en cours d'utilisation, ce qui permet de commander le débit d'hydrogène délivré par le générateur en réglant le débit du courant électrique traversant le générateur.

16. Appareil selon la revendication 15, dans lequel le générateur électrolytique de gaz comprend :
un élément en forme de T (162) qui délimite à l'intérieur une cavité centrale (164) destinée à contenir un fluide à électrolyser pour produire le gaz porteur hydrogène ;
un ensemble électrode/membrane (168) disposé sur un "bras" de l'élément en T ayant une construction en "sandwich", avec, de la cavité centrale (164) vers l'extérieur ;
un support poreux, mouillable (176) ;
une membrane échangeuse de cations (172) ;
une électrode en treillis de platine (178) ;
un film poreux, hydrophobe (180) ; et
un second support poreux mouillable (182) ;
dans lequel des orifices (186) définis dans l'élément en forme de T (162) permettent de constituer une connexion électrique avec l'électrode en treillis de platine (178) ;
un ensemble électrode/membrane (170), disposé sur l'autre "bras" de l'élément en forme de T (162) ayant une construction en "sandwich" avec, de la cavité centrale (164) vers l'extérieur :
un support poreux mouillable (176) ;
une membrane échangeuse d'anions (174) ;
une électrode en treillis de platine (178) ;
un film poreux hydrophobe (180) ; et
un second support poreux mouillable (182) ;
dans lequel des orifices (186) définis dans l'élément en forme de T (162) permettent de constituer une connexion électrique avec l'électrode en treillis de platine de cet ensemble (170) ; et
des bouchons (184) pour maintenir les ensembles électrode/membrane échangeuse de cations et d'anions (168, 170) en place sur les bras de l'élément en forme de T (162) et définissant à l'intérieur des orifices (188) qui permettent de dégager du générateur (160) l'hydrogène et l'oxygène formés.

17. Appareil selon la revendication 11, dans lequel le dispositif d'échantillonnage (196) est une vanne d'échantillonnage avec boucle d'échantillonnage (208).

18. Appareil selon la revendication 17, dans lequel la boucle d'échantillonnage de la vanne d'échantillonnage (208) est remplacée par un appareil ayant pour base une membrane (38) comprenant un élément support (40) avec une partie (42) à double filetage, une membrane tubulaire (52) supportée dans les spires (56, 62) de cette partie, et une courbe en forme de S (60) usinée dans une extrémité (58) de l'élément support qui rejoint les spires alternées (56, 62) de la partie doublement filetée (42) en les faisant communiquer de manière que la membrane puisse passer sur toute la longueur de l'élément support (40) et revenir par ces spires alternées et cette courbe en forme de S (60).

19. Appareil selon la revendication 18, dans lequel la vanne d'échantillonnage (208) prélève directement dans un flux de processus.

20. Appareil selon la revendication 18, dans lequel la vanne d'échantillonnage (208) prélève dans un appareil d'échantillonnage distinct (38) ayant pour base une membrane.

21. Appareil selon la revendication 20, dans lequel l'appareil d'échantillonnage distinct (38) ayant pour base une membrane comprend un élément support (40) ayant une partie (42) à double filetage, une membrane tubulaire (52) supportée dans les spires (56, 62) de cette partie, et une courbe en forme de S (60) usinée dans une extrémité (58) de l'élément support (40) pour relier les spires alternées (56, 62) de la partie à double filetage (42) en les faisant communiquer de manière que la membrane puisse passer sur toute la longueur de l'élément support et revenir par ces spires alternées et cette courbe en forme de S (60).
